# EUROPEAN PATENT SPECIFICATION

(11) **EP 3 926 248 B1**
(45) Date of publication and mention of the grant of the patent: **22.01.2025**
(21) Application number: 20181155.1
(22) Date of filing: 19.06.2020
(51) Int. Cl.: F24F 11/00, F24F 11/30, F24F 11/50, F24F 11/526, F24F 110/50, F24F 120/10, F24F 140/50

(54) **SYSTEM AND METHOD FOR MAINTAINING AIR QUALITY WITHIN A STRUCTURE**
SYSTEM UND VERFAHREN ZUR AUFRECHTERHALTUNG DER LUFTQUALITÄT INNERHALB EINER STRUKTUR
SYSTÈME ET PROCÉDÉ PERMETTANT DE MAINTENIR LA QUALITÉ DE L'AIR À L'INTÉRIEUR D'UNE STRUCTURE

(43) Date of publication of application: 22.12.2021
(73) Proprietor: Leapcraft ApS, 1401 Copenhagen K (DK)
(72) Inventor: Venkatraman, Vinay, 2100 Copenhagen Ø (DK)
(74) Representative: AWA Denmark A/S

(56) References cited:
- EP-A1- 3 279 749
- WO-A1-2020/055872
- US-A1- 2017 154 517
- US-A1- 2017 186 309

## Description

### FIELD OF THE INVENTION

The present invention relates to an air quality alert system, and more particularly relates to a system and method for maintaining air quality within a structure.

### BACKGROUND OF THE INVENTION

Health issues owing to poor air quality has seen a drastic rise over the past few decades with steady rise in respiratory illness. A vast majority of the people tend to stay within indoor spaces, such as homes, office spaces etc. However, indoor activities such as cooking and vacuum cleaning, presence of plastic objects and furnishings, smoking, fireplaces and external weather conditions surrounding the indoor spaces contribute towards increase in the amount of pollutants like fine particles and Volatile Organic Compounds (VOC), apart from high CO2 levels due to respiration of occupants therein thereby worsen the air quality level within the indoor spaces.

Ventilation facilities play a major role in moderating the air quality within the indoor spaces. The ventilation facilities can include natural ventilation facilities such as doors, windows, ventilation slots and mechanical/automated ventilation facilities etc. Natural ventilation facilities are usually opened or closed by the occupants when they experience some variations in indoor temperatures and/or due to external weather conditions. Air quality levels, unlike temperature may not be sensed by the occupants. For example, the occupants can sense temperature as cold, hot, humid, windy, etc. However, when it comes to air quality levels, the same cannot be sensed by the occupants as typical pollutants cannot be perceived by the human nose. In this regard, the occupants may only operate the natural ventilation facilities, by either opening or closing the same, to ensure the temperature is optimum for staying within the indoor spaces. However, since the occupants cannot sense the air quality levels, they may not consider operating the natural ventilation facilitates often enough in order to maintain moderate air quality levels within the indoor spaces.

Further, there exists sensor technologies configured to detect and provide notifications to the occupants of the air quality levels within the indoor spaces. However, the notifications provided by these technologies may go unrecognized by the occupants or these notifications may not facilitate in ensuring that the occupants operate the ventilation facilitates at appropriate intervals of time in order to maintain air quality levels at moderate levels within the indoor spaces. In such cases, the poor indoor air quality will have a profound impact on the health, cognitive function, and well-being of the occupants.

WO 2020/055872 A1 discloses a system for maintaining air quality within a structure providing alerts or notifications of operation of air remediation upon measurement of air quality levels.

In view of the above there is a need for a system and method to efficiently maintain air quality within the indoor spaces at moderate levels so that the occupants can experience a healthy and comfortable living without compromising the thermal comfort of the indoor spaces i.e. not making the indoor spaces uncomfortably cold or hot.

### BRIEF SUMMARY OF THE INVENTION

One or more embodiments of the present invention provide a system and a method for maintaining air quality within a structure, according to claims 1 and 12.

In one aspect of the invention, a system for maintaining air quality within a structure is provided. The system comprises a plurality of sensors positioned within the structure to at least measure air quality levels within the structure, detect presence of one or more occupants therein, and detect a ventilation status of the structure. The system further comprises a controlling unit, in communication with the plurality of sensors. The controlling unit is configured to periodically receive data pertaining to the air quality levels within the structure, presence of one or more occupants therein, and the ventilation status of the structure from the plurality of sensors. The controlling unit is further configured to compare the received air quality levels within the structure with a predefined threshold level. The controlling unit is further configured to provide a first set of alerts in real time to the one or more occupants via a feedback unit and record an initial ventilation status, in response to the air quality levels being greater than the predefined threshold level. The controlling unit is further configured to compare, subsequent to providing the first set of alerts, the air quality levels within the structure with the predefined threshold level and the initial ventilation status of the structure to a present ventilation status of the structure. The present ventilation status is recorded in response to the air quality levels being greater than predefined threshold level. A server communicably coupled to the controlling unit is configured to periodically receive from the controlling unit, information pertaining to the air quality levels being greater than the predefined threshold level based on comparison of the air quality levels with the predefined level along with the initial ventilation status to the present ventilation status subsequent to the controlling unit providing the first set of alerts. The server is further configured to provide a second set of alerts on a communication device of the one or more occupants in response to a determination of the air quality levels within the structure remaining greater than the predefined threshold level and the present ventilation status of the structure being equivalent to the initial ventilation status, and based on external weather conditions; wherein the predefined threshold level is dependent on an occupancy intensity of the one or more occupants within the structure, wherein the controlling unit is configured to compute the occupancy intensity as a product of a number of the one or more occupants present within the structure and an average time the one or more occupants is present within the structure, and wherein a subset of the plurality of sensors are configured to scan for Wi-Fi enabled communication devices of the one or more occupants within a proximal distance to determine the number of occupants within the structure.

In one embodiment, the structure is one of a building, a house, an apartment, and an office space.

In another embodiment, the server receives information pertaining to the external weather conditions from a weather reporting module.

In yet another embodiment, the first set of alerts is at least one of an audio alert, a visual alert, a haptic alert, and a combination thereof.

In yet another embodiment, the second set of alerts is one of a push message on the communication device, SMS alerts, in-app notification, an email, and a combination thereof regarding one or more ventilation requirements of the structure if the air quality levels remains greater than the predefined air quality levels and health hazards to the one or more occupants owing to the air quality levels.

In yet another embodiment, the server periodically provides the second set of alerts upon completion of a preset time period subsequent to the first set of alerts, wherein the preset time period is provided to the one or more occupants to perform the one or more ventilation requirements.

In yet another embodiment, the one or more ventilation requirements is one of open one or more windows, open one or more doors, close the one or more windows and close the one or more doors.

In yet another embodiment, each of the initial and the present ventilation status is at least one of, one or more open windows, one or more closed windows, one or more open doors, one or more closed doors, one or more partially open doors, one or more partially closed doors, one or more partially open windows, and one or more partially closed windows.

In yet another embodiment, the plurality of sensors is one of, but not limited to, a temperature sensor, a CO2 sensor, a VOC sensor, a fine particle sensor , a humidity sensor, a window sensor, a door sensor, an occupancy sensor, and an occupancy intensity sensor.

In yet another embodiment, the server is configured to receive information pertaining to the predefined threshold level being greater than the air quality levels from the controlling unit. The server is further configured to provide a notification to the one or more occupants on the communication device notifying the one or more occupants to reset the present ventilation status to the initial ventilation status.

In yet another embodiment, the ventilation status is at least one of, one or more open windows, one or more closed windows, one or more open doors, one or more closed doors, one or more partially open doors, one or more partially closed doors, one or more partially open windows, and one or more partially closed windows.

In another aspect of the invention, a method for maintaining air quality within a structure is provided, according to claim 12.

Other features and aspects of this invention will be apparent from the following description and the accompanying drawings. The features and advantages described in this summary and in the following detailed description are not all-inclusive, and particularly, many additional features and advantages will be apparent to one of ordinary skill in the relevant art, in view of the drawings, specification, and claims hereof. Moreover, it should be noted that the language used in the specification has been principally selected for readability and instructional purposes, and may not have been selected to delineate or circumscribe the inventive subject matter, resort to the claims being necessary to determine such inventive subject matter.

### BRIEF DESCRIPTION OF THE DRAWINGS

Reference will be made to embodiments of the invention, examples of which may be illustrated in the accompanying figures. These figures are intended to be illustrative, not limiting. The accompanying figures, which are incorporated in and constitute a part of the specification, are illustrative of one or more embodiments of the disclosed subject matter and together with the description explain various embodiments of the disclosed subject matter and are intended to be illustrative. Further, the accompanying figures have not necessarily been drawn to scale, and any values or dimensions in the accompanying figures are for illustration purposes only and may or may not represent actual or preferred values or dimensions. Although the invention is generally described in the context of these embodiments, it should be understood that it is not intended to limit the scope of the invention to these particular embodiments. The invention is defined by the appended claims.
**FIG. 1** is a block diagram of environment for monitoring air quality within a structure **110,** according to one or more embodiments of the present invention;
**FIG. 2** is a block diagram of a system for monitoring air quality within the structure;
**FIG. 3** is an exemplary illustration of an interface that is generated on the communication device of the system of **FIG. 2****;**
**FIG. 4** is a block diagram of a controlling unit in communication with a plurality of sensors of the system of **FIG. 2****;**
**FIG. 4A - 4C** is an exemplary illustration of a second set of alerts provided on the communication device of the system of **FIG. 2****;** and
**FIG. 5** is a flow chart of a method of maintaining air quality within a structure.

### DETAILED DESCRIPTION OF THE INVENTION

Reference will now be made in detail to specific embodiments or features, examples of which are illustrated in the accompanying drawings. Wherever possible, corresponding or similar reference numbers will be used throughout the drawings to refer to the same or corresponding parts. References to various elements described herein, are made collectively or individually when there may be more than one element of the same type. However, such references are merely exemplary in nature. It may be noted that any reference to elements in the singular may also be construed to relate to the plural and vice-versa without limiting the scope of the invention to the exact number or type of such elements unless set forth explicitly in the appended claims. Moreover, relational terms such as first and second, and the like, may be used to distinguish one entity from the other, without necessarily implying any actual relationship or between such entities.

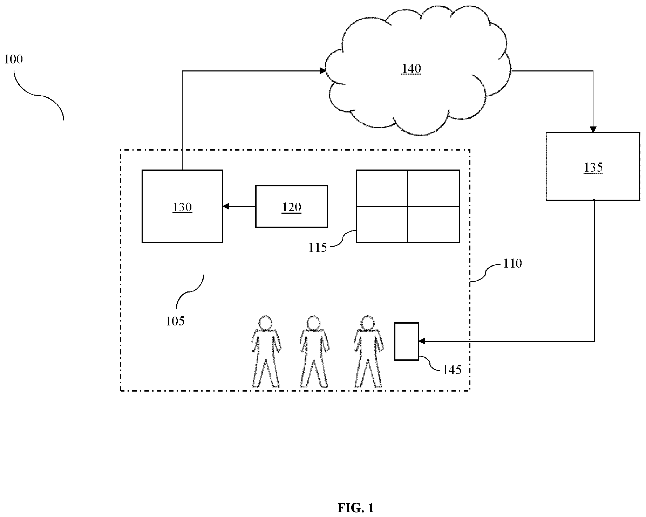

**FIG. 1** illustrates a block diagram of environment **100** in which a system **105** for maintaining air quality within a structure **110** is applied, according to one or more embodiments of the present invention. In the preferred embodiment, the structure **110** is an indoor space to accommodate one or more occupants therein. The structure **110** is one of, but not limited to, a building, a house, an apartment, and an office space.

The structure **110** further includes a ventilation facility **115** positioned within the structure **110.** The ventilation facility **115** permits and restricts air flow between indoor space of the structure **110** and atmosphere surrounding the structure **110.** The ventilation facility **115** is one of a window and a door. The illustrated embodiment depicts a single ventilation facility **115** for the structure **110** only for the purpose of description and explanation and should nowhere be construed as limiting the scope of the description. As such, in alternate embodiments, the structure **110** includes multiple ventilation facilities **115.**

The environment **100** includes a plurality of sensors **120** to measure the air quality levels within the structure **110.** The air quality levels of the structure **110** is dependent on presence of air pollutants present within the structure **110.** The air pollutants include Volatile Organic Compounds (VOC), Carbon dioxide (CO₂), fine particulate matter, and the like. As the presence of the air pollutants increases within the structure **110,** the air quality levels increase or worsens causing harm to the one or more occupants.

The plurality of sensors **120** is further configured to detect presence of one or more occupants within the structure **110,** determine an occupancy intensity of the one or more occupants within the structure **110,** and detect a ventilation status of the ventilation facility **115** of the structure **110.** In this regard, the plurality of sensors **120** includes, but is not limited to, a temperature sensor, a CO₂ sensor, a fine particle sensor, a VOC sensor, a humidity sensor, a window sensor, a door sensor, a Non-Dispersive Infrared (NDIR) Sensor, an occupancy sensor, a Passive Infrared (PIR) sensor, and an occupancy intensity sensor. The ventilation status of the ventilation facility **115** is one of one or more open windows, one or more open doors, one or more closed windows, one or more closed doors, one or more partially open doors, one or more partially closed doors, one or more partially open windows, and one or more partially closed windows.

The environment **100** further includes a controlling unit **130** in communication with the plurality of sensors **120.** The communication unit **130** is configured to receive data pertaining to the air quality levels within the structure **110,** presence of the one or more occupants within the structure **110,** the occupancy intensity of the one or more occupants within the structure **110,** and the ventilation status of the structure **110** from the plurality of sensors **120.** In an embodiment, the controlling unit **130** and the plurality of sensors **120** may communicate with each other via wired connections and/or wireless connections, such as, but not limited to Bluetooth, Near Field Communication (NFC), infrared, Wi-Fi, GPRS, LTE, Edge, and the like. In the illustrated embodiment, the controlling unit **130** is located within the structure **110.** In alternate embodiments, the controlling unit **130** is positioned in a location remotely accessible by the one or more occupants.

In addition, the controlling unit **130** is in communication with a server **135** via a network **140.** The controlling unit **130** is pre-registered with the server **135.** In the invention, the controlling unit **130** transmits the data pertaining to the air quality levels within the structure **110,** presence of the one or more occupants within the structure **110,** the occupancy intensity of the one or more occupants within the structure **110,** and the ventilation status of the structure **110** from the plurality of sensors **120** to the server **135.** Subsequent to transmission of the data from the controlling unit **130** to the server **135,** a copy of the data is stored in the controlling unit **130** for a temporary period in tandem with transmitting it to the server **135.** By doing so, the controlling unit **130** is not accumulated with data from the plurality of sensors **120** subsequent to transfer of the data to the server **135.** Advantageously, the controlling unit **130** is not burdened with large volume of data beyond the capacity of the controlling unit **130,** thereby ensuring effective and efficient maintenance of air quality within the structure **110** over long periods of time. It may be understood that the server **135** may be implemented in a variety of computing systems, such as a mainframe computer, a network server, cloud, and the like.

In one embodiment, the network **140** can include wired connections and/or wireless connections, such as, but not limited to Local Area Network (LAN), Bluetooth, Near Field Communication (NFC), infrared, Wi-Fi, GPRS, LTE, Edge, and the like. The server **135** is in communication with a communication device **145** via the network **140.** The communication device **145** is one of, but not limited to, a mobile phone, a portable computer, a personal digital assistant, a handheld device, a laptop, a digital billboard provided within the structure **110.**

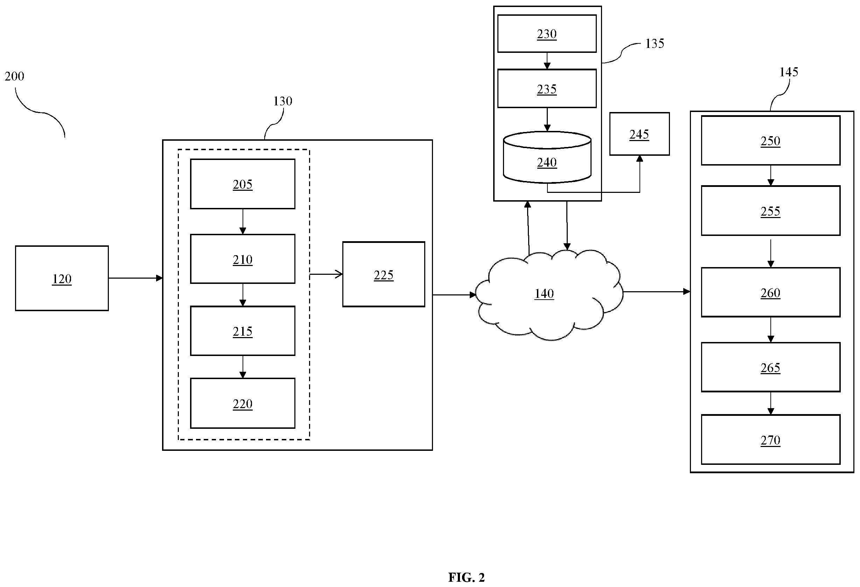

Referring to **FIG. 2, FIG. 2** illustrates a block diagram of the system **105** for monitoring the air quality within the structure **110.** The system **105** includes the plurality of sensors **120** arranged within the structure **110.** As mentioned earlier, the plurality of sensors **120** is configured to at least measure the air quality levels within the structure **110,** detect presence of the one or more occupants within the structure **110,** determine the occupancy intensity of the one or more occupants within the structure **110,** and detect the ventilation status of the ventilation facility **115** (as shown in **FIG.1****)** of the structure **110.** The plurality of sensors **120** further periodically transmits data pertaining to the air quality levels within the structure **110,** presence of one or more occupants **110** therein, and the ventilation status of ventilation facility **120** of the structure **110** to the controlling unit **130.**

The controlling unit **130** may include one or more transceivers **205,** at least one processor **210,** an input/output (I/O) interface **215,** and a memory **220.** The transceiver **205** may be implemented as a device capable of receiving and transmitting information. As per the illustrated embodiment, the transceiver **205** is initially configured to receive the data pertaining to the air quality levels within the structure **110,** presence of one or more occupants **110** therein, and the ventilation status of the ventilation facility **120** of the structure **110.**

The at least one processor **210** may be implemented as one or more microprocessors, microcomputers, microcontrollers, digital signal processors, central processing units, state machines, logic circuitries, and/or any devices that manipulate signals based on operational instructions. Among other capabilities, the at least one processor **210** is configured to fetch and execute computer-readable instructions stored in the memory **220.**

The I/O interface **215** may include a variety of software and hardware interfaces, for example, a web interface, a graphical user interface, serial interface, MOD-BUS or BACnet interface and the like. The I/O interface **215** may allow a user to interact with the controlling unit **130** directly or through an auxiliary device. Further, the I/O interface **215** may enable the controlling unit **130** to communicate with other computing devices, such as web servers and external data servers (not shown). The I/O interface **215** may facilitate multiple communications within a wide variety of networks and protocol types, including wired networks, for example, LAN, cable, etc., and wireless networks, such as WLAN, cellular, or satellite. The I/O interface **215** may include one or more ports for connecting a number of devices to one another or to another server.

The memory **220** may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

The system 105 comprises the controlling unit 130.

The controlling unit **130** is configured to periodically receive the data pertaining to the air quality levels within the structure **110,** presence of one or more occupants **110** therein, the occupancy intensity of the one or more occupants, and the ventilation status of ventilation facility **120** of the structure **110** from the plurality of sensors **120.** Thereafter, the controlling unit **130** compares the received air quality levels within the structure **110** with a predefined threshold level.

The predefined threshold level corresponds to a permissible air quality level, beyond which air quality is considered to be dangerous or hazardous to the one or more occupants. The predefined threshold level is at least one of, but not limited to, a CO₂ threshold level, a VOC threshold level, a temperature threshold level, and a humidity threshold level. In one embodiment, the predefined threshold level is defined by a governing body or established in national standards. In alternate embodiments, the predefined threshold level is defined by the one or more occupants. The predefined threshold level is stored in the memory **220** of the controlling unit **130.** In one embodiment, the predefined threshold level is dependent on the occupancy intensity of the one or more occupants within the structure **110.**

On receiving the data from the plurality of sensors **120,** the processor **210** compares the data pertaining to the air quality levels within the structure **110** with the predefined threshold level as provided by the one or more occupants. In one embodiment, the predefined threshold level is dependent on the occupancy intensity of the one or more occupants within the structure **110.** The occupancy intensity is computed as a product of a number of the one or more occupants present within the structure **110** and average time the one or more occupants is present within the structure **110.**

Thereafter, on determination of the presence of the one or more occupants and if the processor **220** of the controlling unit **130** determines that the received air quality levels is greater than the predefined threshold level, a first set of alerts is provided in real time to the one or more occupants. The controlling unit **130** provides the first set of alerts via a feedback unit **225.** The feedback unit **225** is configured to generate one of a sound alert, a light alert, a haptic alert, and a combination thereof in response to the air quality levels being greater than the predefined threshold level. In one embodiment, the feedback unit **225** provides the light alert in various colors & intensity, and the sound alert in various tones and loudness and a combination thereof.

In the illustrated embodiment, the controlling unit **130** and the feedback unit **225** are together embodied as a single unit. In alternate embodiments, the feedback unit **225** may be located at a remote location identifiable by the one or more occupants.

In an embodiment, the first set of alerts provided in real time indicates that the first set of alerts are provided by the feedback unit **225** without any delay in time.

In addition to providing the first set of alerts, the controlling unit **130** records an initial ventilation status of the ventilation facility **115** of the structure **105.** The initial ventilation status of the ventilation facility **115** is the ventilation status of the ventilation facility **115** at the time the controlling unit **130** provided the first set of alerts via the feedback unit **225.** The initial ventilation status of the ventilation facility **115** is one of one of one or more open windows, one or more open doors, one or more closed windows, one or more closed doors, one or more partially open doors, one or more partially closed doors, one or more partially open windows, and one or more partially closed windows. In one embodiment, the controlling unit **130** records a ventilation status of the ventilation facility prior to comparing the received air quality levels and the predefined threshold level.

Pursuant to completion of a preset time period subsequent to providing the first set of alerts, the controlling unit **130** compares the air quality levels within the structure **115** which is being received periodically from the plurality of sensors **120** with the predefined threshold level. The preset time period is provided for the occupants to perform one or more ventilation requirements. The ventilation requirement is one of open one or more windows, open one or more doors, close the one or more windows and close the one or more doors.

In response to the air quality levels being greater than the predefined threshold level, a present ventilation status of the ventilation facility **115** is recorded at the memory **220.** In an embodiment, the present ventilation status of the ventilation facility **115** is one of one of one or more open windows, one or more open doors, one or more closed windows, one or more closed doors, one or more partially open doors, one or more partially closed doors, one or more partially open windows, and one or more partially closed windows.

Thereafter, the controlling unit **130** compares the initial ventilation status of the ventilation facility **115** of the structure **110** to the present ventilation status of the ventilation facility **115** of the structure **110.** Based on the comparison, the controlling unit **130** determines if the air quality levels within the structure **110** is one of greater than and lesser than the predefined threshold level. In response to the air quality levels being greater than the predefined threshold value, the controlling unit **130** transmits the information to the server **135** via the network **140.**

The server **135** may include a communication transceiver **230,** at least one processor **235,** and a memory **240.** The communication transceiver **230** may be implemented as a device capable of receiving and transmitting information. As per the illustrated embodiment, the communication transceiver **230** is configured to enable communication between the controlling unit **130** and the server **135.** In one embodiment, the communication transceiver **230** is configured to enable communication between the plurality of sensors **120** and the server **135.** The description of the at least one processor **235** and the memory **240** of the server is similar to the processor **210** and the memory **220** of the controlling unit **130,** and thus repeated description of the processor **235** and the memory **240** of the server is omitted herein for the sake of brevity. The memory **240** is in communication with a storage unit **245.** The storage unit may be located at a remote location accessible by the server **135.**

As mentioned earlier, the server **135** receives the information pertaining to the air quality levels being greater than the predefined threshold level. The server **135** receives the corresponding ventilation status of the ventilation facility **115** based on comparison of the initial ventilation status to the present ventilation status. The server **135** further receives information pertaining to external weather conditions from a weather reporting module, such as an online database, a weather reporting agency, and the like. In an alternate embodiment, the structure **115** includes a sensor (not shown) positioned outside the structure **115.** The sensor is configured to provide to one of the controlling unit **130** and the server **135** information to the external weather conditions. The information includes, but is not limited to, temperature, humidity, and precipitation.

In response to receiving the information and subsequent to the controlling unit providing the first set of alerts, the server **135** is configured to provide a second set of alerts on the communication device **145** of the one or more occupants via the network **140.** More specifically, in the preferred embodiment, the server **135** provides the second set of alerts in response to the controlling unit **130** determining that the air quality levels within the structure **110** is greater than the predefined threshold level, and the present ventilation status is equivalent to the initial ventilation status.

In an alternate embodiment, the server **135** periodically receives the data pertaining to the air quality levels within the structure **110,** presence of one or more occupants **110** therein, the occupancy intensity of the one or more occupants, and the ventilation status of ventilation facility **120** of the structure **110** from the plurality of sensors **120** via the controlling unit **130** and the network **140.** On receiving the data, the server **135** (instead of the controlling unit **130)** determines if the air quality levels within the structure **110** is greater than the predefined threshold level and the present ventilation status is equivalent to the initial ventilation status. The server **135** provides the second set of alerts in response to determining that the air quality levels within the structure **110** is greater than the predefined threshold level and the present ventilation status is equivalent to the initial ventilation status.

The communication device **145** includes a display **250,** a downloadable interface module **255,** a memory **260,** a transceiver **265** and a processor **270.** The processor **270** controls the operation of the display **250,** the downloadable interface module **255,** the memory **260** and the transceiver **265.** The transceiver **265** may be implemented as a device capable of receiving and transmitting information. As per the illustrated embodiment, the transceiver **230** is configured to enable communication between the server **135** and the communication device **145** of the one or more occupants. The description of the at least one processor **270** and the memory **260** of the communication device **145** is very much similar to the processor **210** and the memory **220** of the controlling unit **130,** and thus repeated description of the processor **235** and the memory **240** of the server is omitted herein for the sake of brevity.

In an embodiment, within the communication device **145,** the display **250** is in communication with the downloadable interface module **255.** The downloadable interface module **255** is in communication with the memory **260.** The display **250,** the downloadable interface module **255,** the memory **260** and the transceiver **265** are in communication with the processor **270.**

The downloadable interface module **255** is required to be installed by the one or more occupants on the communication device **145.** The downloadable interface module **255** is configured to display via the display **250** of the communication device **145** and facilitate the one or more occupants to input and/or view data.

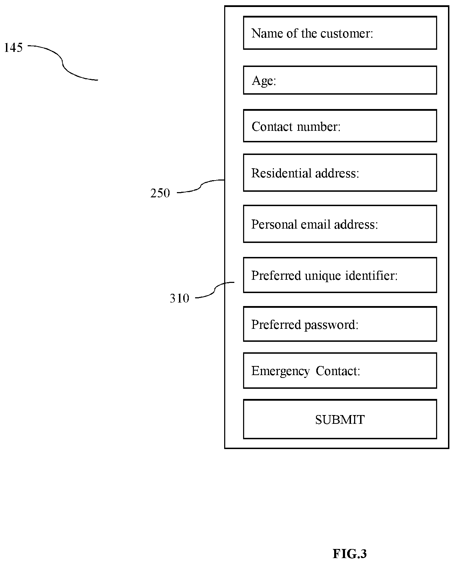

At the outset, the one or more occupants, hereinafter referred to as "the occupants", are required to register with the server **135** in order to create an account. For registration, the occupants are required to install the downloadable interface module **255.** Referring to **FIG. 3, FIG. 3** illustrates an example of an interface **310** that is generated on the display **250** of the communication device **145** once the downloadable interface module **255** is installed. The interface **310** displays a questionnaire required to be filled up by the occupants. The questionnaire requires the occupants to input credential details such as, but not limited to, name of occupant, age, personal email address, occupant identifier such as, but not limited to, contact number, residential address, preferred unique identifier and password. Once the credential details are input by the occupants on the interface **310,** the processor **270** of the communication device **145** verifies if the details provided are in the right order. In case of any error, the occupant is notified regarding the same.

Thereafter, a verification code is sent to either the occupant's email address or the contact number of the occupant. The occupant is required to input the verification code at the communication device. Once this task is completed, the occupant is registered. The credentials of the occupant which is received is stored in the memory **240** of the server **135.**

Referring to **FIG. 2****,** on registration of the communication device **145** with the server **135,** the server **135** is configured to provide the second set of alerts on the communication device **145** of the one or more occupants via the network **140.** More specifically, the server **135** provides the second set of alerts in response to the controlling unit **130** determining that the air quality levels within the structure **110** is greater than the predefined threshold level, and the present ventilation status of the ventilation facility **115** is equivalent to the initial ventilation status of the ventilation facility **115.** The server **135** also takes into consideration the external weather conditions.

The second set of alerts is one of a push message on the communication device, SMS alerts, in-app notification, an email, and a combination thereof. The second set of alerts informs the occupants of a ventilation requirement of the structure 110 and health hazards to the occupants owing to the air quality levels.

In addition, the server **135** periodically provides the second set of alerts on the communication device **145** of the occupants. The second set of alerts are provided and/or displayed on the display **250** of the communication device **145** upon completion of the preset time period and subsequent to the controlling unit **130** providing the first set of alerts. The preset time period is provided for the occupants to perform one or more ventilation requirements. The ventilation requirement is one of open one or more windows, open one or more doors, close the one or more windows and close the one or more doors.

As the server **135** provides the second set of alerts in a periodic manner, the controlling unit **135** continues to measure the air quality levels within the structure **110.** Accordingly, consequent to the controlling unit **130** transmitting information pertaining to the predefined threshold level being greater than the air quality levels, the server **135** provides a notification on the communication device **145** notifying the occupants to reset the present ventilation status to the initial ventilation status.

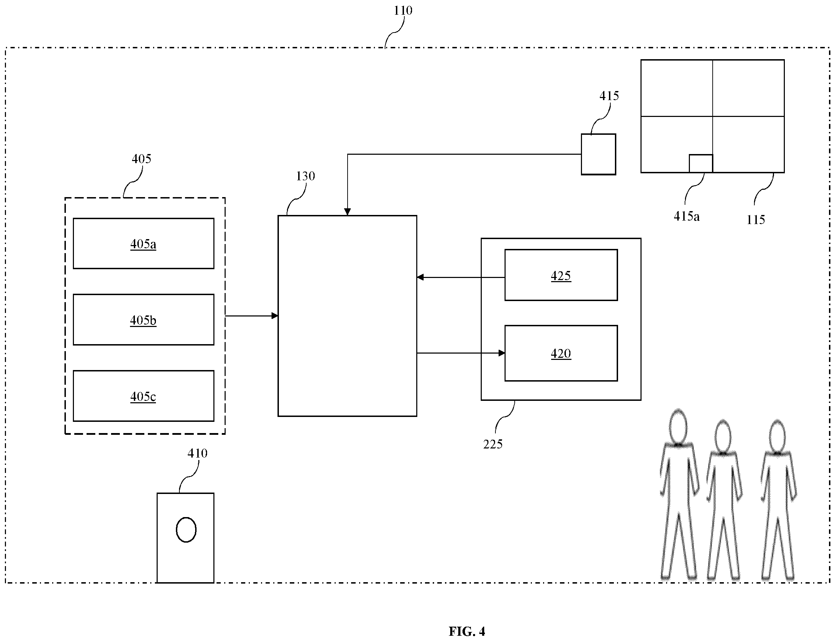

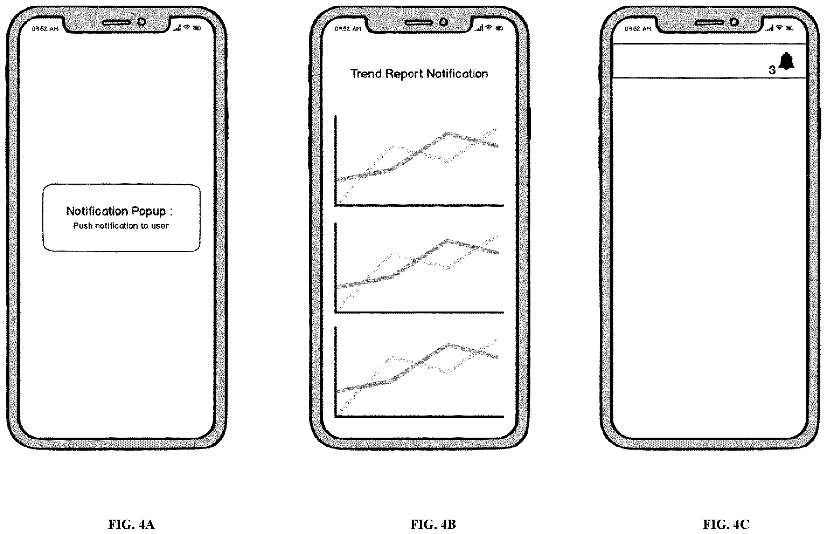

Referring to **FIG. 4, FIG. 4** illustrates the controlling unit **130** in communication with the plurality of sensors **120.** As mentioned earlier, the plurality of sensors 120 are configured to measure the air quality levels within the structure **110,** detect presence of one or more occupants within the structure **110,** determine the occupancy intensity of the occupants within the structure **110,** and detect the ventilation status of the ventilation facility **115** of the structure **110.**

For the purpose of description and explanation, the plurality of sensors **120** is split into at least three sets. A first set of sensors **405** to measure the air quality levels within the structure **110,** a second set of sensors **410** to detect presence of the one or more occupants within the structure **110,** and a third set of sensors **415** to detect the ventilation status of the ventilation facility **115** positioned within the structure **110.**

In one embodiment, the first set of sensors **405** of the plurality of sensors **120** measure a level of the air pollutants, such as Volatile Organic Compounds (VOC), CO₂, fine particulate matter, and the like, present within the structure **110.** By doing so, the first set of sensors of the plurality of sensors **120** measures the air quality levels within the structure **110.** In addition, the first set of sensors is configured to detect the temperature level and humidity level within the structure **110.** In this regard, the first set of sensors is one of, but not limited to, a CO₂ sensor, a Non-Dispersive Infrared (NDIR) Sensor, a temperature sensor, and a humidity sensor. More specific to the illustrated embodiment, the first set of sensors **405** include a temperature sensor **405a,** a CO₂ sensor **405b,** and a humidity sensor **405c.** It is to be noted that the first set of sensors **405** could include multiple sensors to measure various parameters with respect to the indoor air quality, but for the sake of description and explanation are limited to the sensors mentioned above.

Further, the second set of sensors **410** of the plurality of sensors **120** is configured to detect presence of the occupants within the structure **110.** In the invention, the second set of sensors **410** scan for Wi-Fi signals to identify unique Wi-Fi enabled communication devices **145** of the within a proximal distance of the occupants and the second set of sensors **410** within the structure **110.** Accordingly, the second set of sensors **410** includes sensors to one of, detect presence of the occupants within the structure **110,** compute the occupancy intensity of the occupants within the structure **110,** and a combination thereof. In the invention, the occupancy intensity is the product of the number of the occupants present within the structure **110** and the average time the occupants are present within the structure **110.** In this regard, the second set of sensors **410** is one of an occupancy sensor, a Passive Infrared (PIR) sensor, and an occupancy intensity sensor.

The third set of sensors **415** of the plurality of sensors **120** is configured to detect the ventilation status of the ventilation facility **115** positioned within the structure **110.** In one embodiment, the third set of sensors **415** is a hall effect sensor placed adjacent to the ventilation facility **115.** A permanent magnet **415a** is placed at a proximal distance from each of the hall effect sensors, preferably on the ventilation facility **115** i.e., the door and/or the window. Accordingly, magnetic field of the permanent magnet **415a** is detected to infer one of open, close and an intermediate position of the ventilation facility **115.** Thereafter, each of the first, the second, and the third set of sensors **405, 410, 415** periodically transmits the data to the controlling unit **130.**

The predefined threshold value is defined and stored within the memory **220** of the controlling unit **130.** The predefined threshold value is defined as the permissible air quality beyond which the air quality is determined to be hazardous for the occupants to breath. In one embodiment, the predefined threshold level is split into multiple predefined threshold levels and related to one of the first set of alerts and the second set of alerts based on a priority as set by the one or more occupants. More specifically, on violation of a first predefined threshold level, the controlling unit **130** provides the visual alert via the feedback unit **225.** Similarly, on violation of a second predefined threshold level, the controlling unit **130** provides the sound alert via the feedback unit **225,** and violating a third predefined threshold level, the server **135** (as shown in **FIG. 2****)** provides the second set of alerts on the communication device **145** of the occupants. Further, the server **135** provides the second set of alerts on the communication device **145** of the occupants on violation of the third predefined threshold level on a long term basis. More specifically, if the air quality levels continue to remain greater than the third predefined level subsequent to providing the second set of alerts, the server **135** continues to provide the second set of alerts to the occupants on the communication device **145.** However, the frequency in which the server **135** provides the second set of alerts on the communication device **145** will not be frequent and the server **135** will provide the second set of alerts in the order of hourly, weekly, monthly, and yearly.

It is however to be noted that the predefined threshold level is explained with respect to the first, the second, and the third predefined threshold level for the purpose of description and explanation and should nowhere be construed as limiting the scope of the description. In this regard, the predefined threshold level may be split into more than the first, the second, and the third predefined threshold level based on occupant preferences and structure **110** requirements. In another embodiment, each of the first, the second, and the third predefined threshold levels are further categorized into a low occupancy mode and a high occupancy mode based on the number of occupants present within the structure **110.** In yet another embodiment, the controlling unit **130** is provided with a knob **425** to allow the occupants to manually select between the high occupancy mode and the low occupancy mode.

The controlling unit **130** periodically receives the data from each of the first, the second, and the third set of sensors **405, 410, 415.** In addition, the controlling unit **130** determines the occupancy intensity within the structure **110.** In the invention, the second set of sensors **410** scan for Wi-Fi enabled communication device **145** of the one or more occupants within the proximal distance to determine the number of occupants within the structure **110.** Thereafter, the controlling unit **130** computes the occupancy intensity by multiplying the number of occupants within the structure **110** and the average time the occupants are present within the structure **110.**

In one embodiment, the communication device **145** of each of the occupants transmit a probe packet in regular intervals to connect to a network. The probe packet includes a corresponding Media Access Control (MAC) address, a time stamp, a Received Signal Strength Indicator (RSSI). The MAC address aids in identifying the communication device **145** and the RSSI indicates presence of the communication device **145** within the structure **110.** The periodically received time stamp enables the controlling unit 130 to determine the average time the occupants are present within the structure **110.** The controlling unit **130** determines the number of the one or more occupants present within the structure **110** based on the MAC address of the communication device **145** of each of the occupants present within the structure **110.** The controlling unit **130** further determines the average time the occupants are present within the structure 110 based on the received time stamp. Thereafter, the controlling unit **130** computes the occupancy intensity by multiplying the number of occupants present within the structure **110** and the average time the occupants are present within the structure **110.**

The processor **210** of the controlling unit **130** thereafter compares the received air quality levels with at least one of the first, the second, and the third predefined threshold levels.

The controlling unit **130** provides the first set of alert via an alert unit **420** of the feedback unit **225,** in response to the received air quality levels being greater than the first predefined threshold level. The controlling unit **130** further records an initial ventilation status of the ventilation facility **115.** The alert unit **420** is capable of generating one of the sound alert, the light alert, the haptic alert, and combination thereof. Accordingly and more specifically, the controlling unit **130** provides the visual alert via the alert unit **420** to the occupants. At the same time, the controlling unit **420** continues to periodically receive the data from each of the first set, the second set, and the third set of sensors **405, 410, 415.**

The controlling unit **130** further compares the air quality levels within the structure **110** with the second predefined threshold level. Further, the controlling unit **130** compares the initial ventilation status of the structure **110** to the present ventilation status of the structure **110.** In response to the air quality levels being greater than the second predefined threshold level and completion of the preset period, the controlling unit **130** provides the sound alert via the alert unit **420** of the feedback unit **225.**

The controlling unit **130,** thereafter, compares the air quality levels within the structure with the third predefined threshold level and compares the initial ventilation status to the present ventilation status. In one embodiment, the controlling unit **130** receives information pertaining to the external weather conditions. Subsequent to providing the first set of alerts, i.e., the visual alert and the sound alert, via the alert unit **420** and on completion of the preset time period, the controlling unit **130** communicates with the server **135** the information pertaining to the air quality levels being greater than the third predefined threshold level. The controlling unit **130** further communicates information pertaining to the corresponding ventilation status of the ventilation facility **115** of the structure **110.**

The server **135** determines a ventilation requirement of the structure **110** based on the received air quality levels and the external weather condition. Accordingly, the server **135** provides the occupants with the second set of alerts indicating the ventilation requirement, time for which the ventilation requirement is to be performed on the communication device **145.**

By doing so, the server **135** is able to ensure thermal comfort within the structure **110** and simultaneously ensure maintenance of air quality therein. The server **135** is able to adapt the frequency and length of the second set alerts provided on the communication device **145** with respect to the external weather conditions and internal temperature and also communicate the timely closing of ventilation facility. The ventilation requirement is one of, but not limited to, open the one or more windows, open the one or more doors, close the one or more windows, and close the one or more doors. The second set of alerts is one of a push message, as shown in **FIG. 4A** on the communication device **145,** SMS alerts, in-app notifications such as air quality trends as shown in **FIG. 4B****,** notifications, as shown in **FIG. 4C****,** an email, and a combination thereof.

Based on the above examples and embodiments as illustrated above, the system **105** is configured to provide multiple alerts to the occupants to ensure adequate ventilation of the structure and as such advantageously achieving behavior modification of the occupants. In addition, the system **105** takes into consideration the external weather conditions prior to providing the ventilation requirement. By doing so, the system **105** recommends the occupants to perform the ventilation requirement within the preset time period so as to maintain the thermal comfort within the structure **110.**

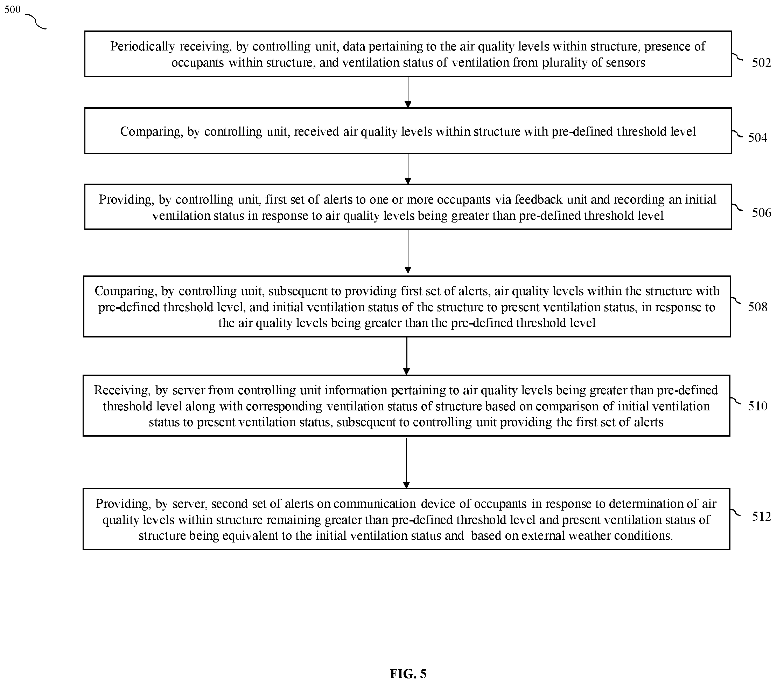

Referring to **FIG. 5, FIG. 5** shows a flow chart of a method **500** of maintaining the air quality levels within the structure **110.** For the purpose of description, the method **500** is described with the embodiment as illustrated in **FIG. 2** and **FIG. 4****.**

At step **502,** the method **500** includes the step of periodically receiving, by the controlling unit **130,** data pertaining to the air quality levels within the structure **130,** presence of the occupants within the structure **110,** the occupancy intensity of the occupants, and a ventilation status of the ventilation facility **115** of the structure **110** from a plurality of sensors **120.**

At the outset, the controlling unit **130** is configured to define the predefined threshold level based on standards set by the governing body. As mentioned earlier, the predefined threshold level is defined based on the level of priority and the occupancy intensity of the occupants within the structure **110.** Accordingly, for example, each of the predefined threshold levels are as below:

**Table 1: Predefined threshold levels**

| | High occupancy mode | Low occupancy mode |
|---|---|---|
| First predefined threshold level | 1200 - 1800 PPM CO₂ | 900 - 1200 PPM CO₂ |
| Second predefined threshold level | 1800 - 2600 PPM CO₂ | 1200 - 1800 PPM CO₂ |
| Third predefined threshold level | 2600 and above PPM CO₂ | 1800 and above PPM CO₂ |

The controlling unit **130** receives data pertaining to the air quality levels from the first set of sensors **405** of the plurality of sensors **120.** Further, the controlling unit **130** computes the occupancy intensity by multiplying the number of occupants within the structure **110** and the average time the occupants are present within the structure **110** based on the data received from the second set of sensors **410.**

At step **504,** the method **500** includes the step of comparing, by the controlling unit **130,** the received air quality levels within the structure **110** with a predefined threshold level. At step **506,** the method **500** includes the step of providing, by the controlling unit **130,** a first set of alerts to the occupants via the feedback unit **225** and recording an initial ventilation status in response to the air quality levels being greater than the predefined threshold level.

Based on the determined occupancy intensity, the controlling unit **130** establishes if the structure **110** has one of a high occupancy mode and a low occupancy mode. Based on the determination, the controlling unit **130** compares the received air quality levels with the first predefined threshold value. The controlling unit **130** provides the first set of alert via the alert unit **420** of the feedback unit **225,** in response to the received air quality levels being greater than the first predefined threshold level. In one embodiment, the controlling unit **130** provides the visual alert via the alert unit **420** to the occupants.

At the same time, the controlling unit **420** continues to periodically receive the data from each of the first set, the second set, and the third set of sensors **405, 410, 415.** The controlling unit **130** further compares the air quality levels within the structure **110** with the second predefined threshold level. In response to the air quality levels being greater than the second predefined threshold level and completion of a first preset time period, the controlling unit **130** provides the sound alert via the alert unit **420** of the feedback unit **225.** The first preset time period is provided to the occupants to perform the one or more ventilation requirements

Thereafter, the controlling unit **130** records the initial ventilation status of the ventilation facility **115** at the time the controlling unit **130** provides the first set of alerts via the feedback unit **225.** The initial ventilation status of the ventilation facility **115** is at least one of one or more open windows, one or more open doors, one or more closed windows, one or more closed doors, one or more partially open doors, one or more partially closed doors, one or more partially open windows, and one or more partially closed windows.

At step **508,** the method **500** includes the step of comparing, by the controlling unit **110,** subsequent to providing the first set of alerts, the air quality levels within the structure **110** with the predefined threshold level and the initial ventilation status of the structure **110** to the present ventilation status in response to the air quality levels being greater than the predefined threshold level. The present ventilation status of the ventilation facility **115** is recorded in response to the air quality levels being greater than the predefined threshold level.

As mentioned earlier, the controlling unit **110** periodically receives the data pertaining to the air quality levels within the structure **110.** Accordingly, subsequent to comparison to the second predefined threshold level and thereafter providing the first set of alerts via the alert unit **420,** the controlling unit **130** receives from the first set of sensors **405** the air quality levels within the structure **110.** In addition, the controlling unit **130** receives the present ventilation status of the ventilation facility **115.** On receiving the data from the first and the second set of sensors **405, 410,** the controlling unit **130** compares the air quality levels with the third predefined threshold value. In response to the air quality levels being greater than the third predefined threshold value, the controlling unit **130** compares the initial ventilation status of the structure **110** to the present ventilation status of the ventilation facility **115.**

By doing so, the controlling unit **130** is able to determine if the occupants performed one of the one or more ventilation requirements. The ventilation requirement is one of open one or more windows, open one or more doors, close the one or more windows and close the one or more doors. In an alternate embodiment, the controlling unit **130** receives the external weather conditions from the weather reporting module, the online database, and the sensor positioned outside the structure **110.** Accordingly, the controlling unit **130** determines if the air quality level remains to be greater than the second predefined threshold value due to external weather conditions.

At step **510,** the method **500** includes the step of receiving by the server **135** from the controlling unit **130** information pertaining to the air quality levels being greater than the predefined threshold level. The server **135** further receives information pertaining to the corresponding ventilation status of the structure **110** based on comparison of the initial ventilation status to the present ventilation status subsequent to the controlling unit **130** providing the first set of alerts.

Subsequent to providing the first set of alerts, i.e., the visual alert and the sound alert, via the alert unit **420** and on completion of the preset time, the controlling unit **130** transmits to the server **135** and the information pertaining to the air quality levels being greater than the third predefined threshold level the corresponding ventilation status of the ventilation facility **115** of the structure **110.**

At step **512,** the method **500** includes the step of providing, by the server **135,** a second set of alerts on the communication device **145** of the occupants in response to the determination of the air quality levels within the structure **110** remaining greater than the predefined threshold level and the present ventilation status of the structure being equivalent to the initial ventilation status, and based on the external weather conditions.

Subsequent to receiving the information, the server **135** determines the ventilation requirement of the structure **110** based on the received air quality levels and the external weather condition. Accordingly, the server **135** provides the occupants with a second set of alerts indicating the ventilation requirement, time for which the ventilation requirement is to be performed. By doing so, the server **135** is able to maintain thermal comfort within the structure **110** and ensure maintenance of air quality therein. The ventilation requirement is one of, but not limited to, open the one or more windows, open the one or more doors, close the one or more windows, and close the one or more doors. The second set of alerts is one of a push message, on the communication device **145,** SMS alerts, in-app notifications such as air quality trends, notifications, an email, and a combination thereof.

Subsequent to providing the second set of alerts, the controlling unit **130** receives data pertaining to the air quality levels within the structure **115.** The controlling unit **130** compares the received air quality levels with the third predefined threshold level. On determination that the air quality levels are greater than the third predefined threshold levels, the controlling unit **130** provides the information pertaining to the air quality levels being greater than the third predefined threshold level. The controlling unit **130** further communicates information pertaining to the corresponding ventilation status of the ventilation facility **115** of the structure **110.**

Thereafter, the server **135** provides the second set of alerts on the communication device **145.** In addition, a frequency in which the server **135** provides the second set of alerts on the communication device **145** will not be frequent. More specifically, the server **135** will provide the second set of alerts in the order of hourly, weekly, monthly, and yearly.

In one embodiment, the controlling unit **130** receives data pertaining to the air quality levels within the structure **115.** The controlling unit **130** compares the received air quality levels with the third predefined threshold level. On determination that each of the predefined threshold levels is greater than the air quality levels, the controlling unit **130** transmits information pertaining to the predefined threshold level being greater than the air quality levels to the server **135.** Thereafter, the server **135** provides a notification to the communication device **145** of the occupants notifying the occupants to reset the present ventilation status to the initial ventilation status.

In one embodiment, the server **135** receives information pertaining to the air quality levels being greater than the third predefined threshold level. The server **135** compares the present ventilation status and the initial ventilation status of the ventilation facility **115.** On determination that the initial ventilation status and the current ventilation status is not same, the server **135** collects data regarding the external weather conditions from the weather reporting module. Accordingly, the server **135** determines if the external weather conditions are the cause for the air quality level within the structure **110** to remain greater than the third predefined threshold level. The server **135,** thereafter, provides the second set of alerts to the communication device **145,** indicating the ventilation requirement corresponding to closing the ventilation facility **115** of the structure.

While aspects of the present invention have been particularly shown and described with reference to the embodiments above, it will be understood by those skilled in the art that various additional embodiments may be contemplated by the modification of the disclosed machines, systems and methods without departing from the scope of the claims.

## Claims

1. A system (105) for maintaining air quality within a structure, the system comprising
a plurality of sensors (120, 405, 410, 415) positioned within the structure to at least measure air quality levels within the structure, detect presence of one or more occupants therein, and detect a ventilation status of the structure;
a controlling unit (130), in communication with the plurality of sensors, configured to:
periodically receive data pertaining to the air quality levels within the structure, presence of the one or more occupants therein, and the ventilation status of the structure from the plurality of sensors;
compare the received air quality levels within the structure with a predefined threshold level;
provide a first set of alerts in real time to the one or more occupants via a feedback unit (225) and record an initial ventilation status, in response to the air quality levels being greater than the predefined threshold level;
compare, subsequent to providing the first set of alerts, the air quality levels within the structure with the predefined threshold level, and the initial ventilation status of the structure to a present ventilation status of the structure, the present ventilation status recorded in response to the air quality levels being greater than the predefined threshold level; and
a server (135) communicably coupled to the controlling unit configured to
periodically receive, from the controlling unit, information pertaining to the air quality levels being greater than the predefined threshold level based on comparison of the air quality levels with the predefined threshold level along with the ventilation status of the structure based on comparison of the initial ventilation status to the present ventilation status subsequent to the controlling unit providing the first set of alerts; and
provide a second set of alerts on a communication device (145) of the one or more occupants in response to a determination of the air quality levels within the structure remaining greater than the predefined threshold level and the present ventilation status of the structure being equivalent to the initial ventilation status, and based on external weather conditions,
wherein the predefined threshold level is dependent on an occupancy intensity of the one or more occupants within the structure, wherein the controlling unit is configured to compute the occupancy intensity as a product of a number of the one or more occupants present within the structure and an average time the one or more occupants is present within the structure, and wherein a subset of the plurality of sensors (410) are configured to scan for Wi-Fi enabled communication devices (145) of the one or more occupants within a proximal distance to determine the number of occupants within the structure.

2. The system according to claim 1, wherein the structure is at least one of a building, a house, an apartment, and an office space.

3. The system according to any one of the preceding claims , wherein the server receives information pertaining to the external weather conditions from a weather reporting module.

4. The system according to any one of the preceding claims, wherein the first set of alerts is at least one of an audio alert, a visual alert, a haptic alert, and a combination thereof.

5. The system according to any one of the preceding claims, wherein the second set of alerts is one of a push message on the communication device, SMS alerts, in-app notification, an email, and a combination thereof regarding one or more ventilation requirements of the structure if the air quality levels remains greater than the predefined air quality levels and health hazards to the one or more occupants owing to the air quality levels.

6. The system according to claim 5, wherein the server periodically provides the second set of alerts upon completion of a preset time period subsequent to the first set of alerts, wherein the preset time period is provided to the one or more occupants to perform the one or more ventilation requirements.

7. The system according to claim 5 or 6, wherein the one or more ventilation requirements is one of open one or more windows, open one or more doors, close the one or more windows and close the one or more doors.

8. The system according to any one of the preceding claims, wherein each of the initial and the present ventilation status is at least one of, one or more open windows, one or more closed windows, one or more open doors, one or more closed doors, one or more partially open doors, one or more partially closed doors, one or more partially open windows, and one or more partially closed windows.

9. The system according to any one of the preceding claims, wherein the plurality of sensors is one of, but not limited to, a temperature sensor, a CO2 sensor, a VOC sensor, a fine particle sensor, a humidity sensor, a window sensor, a door sensor, an occupancy sensor, and an occupancy intensity sensor.

10. The system according to any one of the preceding claims, wherein the server is further configured to:
receive information, from the controlling unit, pertaining to the predefined threshold level being greater than the air quality levels, and
provide a notification to the one or more occupants on the communication device notifying the one or more occupants to reset the present ventilation status to the initial ventilation status.

11. The system according to any one of the preceding claims, wherein the ventilation status is at least one of, one or more open windows, one or more closed windows, one or more open doors, one or more closed doors, one or more partially open doors, one or more partially closed doors, one or more partially open windows, and one or more partially closed windows.

12. A method of maintaining air quality within a structure, the method comprising the steps of:
periodically receiving, by a controlling unit (130), data pertaining to the air quality levels within the structure, presence of one or more occupants therein, and a ventilation status of the structure from a plurality of sensors (120, 405, 410, 415);
comparing, by the controlling unit, the received air quality levels within the structure with a predefined threshold level;
providing, by the controlling unit, a first set of alerts to the one or more occupants via a feedback unit (225) and recording an initial ventilation status in response to the air quality levels being greater than the predefined threshold level;
comparing, by the controlling unit, subsequent to providing the first set of alerts, the air quality levels within the structure with the predefined threshold level, and the initial ventilation status of the structure to a present ventilation status of the structure, the present ventilation status recorded in response to the air quality levels being greater than the predefined threshold level;
periodically receiving, by a server (135) from the controlling unit. information pertaining to the air quality levels being greater than the predefined threshold level based on comparison of the air quality levels with the predefined threshold level along with the ventilation status of the structure based on comparison of the initial ventilation status to the present ventilation status, subsequent to the controlling unit providing the first set of alerts; and
providing, by the server, a second set of alerts on a communication device (145) of the one or more occupants in response to a determination of the air quality levels within the structure remaining greater than the predefined threshold level and the present ventilation status of the structure being equivalent to the initial ventilation status, and based on external weather conditions,
wherein the predefined threshold level is dependent on an occupancy intensity of the one or more occupants within the structure, wherein the controlling unit computes the occupancy intensity as a product of a number of the one or more occupants present within the structure and an average time the one or more occupants is present within the structure, and wherein a subset of the plurality of sensors (410) scan for Wi-Fi enabled communication devices (145) of the one or more occupants within a proximal distance to determine the number of occupants within the structure.

## Patentansprüche

1. System (105) zum Aufrechterhalten der Luftqualität innerhalb einer Struktur, wobei das System umfasst:
eine Mehrzahl von Sensoren (120, 405, 410, 415), die innerhalb der Struktur positioniert sind, um zumindest Luftqualitätsniveaus innerhalb der Struktur zu messen, die Anwesenheit eines oder mehrerer Bewohner darin zu detektieren und einen Belüftungsstatus der Struktur zu detektieren;
eine Steuereinheit (130) in Kommunikation mit der Mehrzahl von Sensoren, die dazu konfiguriert ist:
periodisch Daten zu empfangen, die sich auf die Luftqualitätsniveaus innerhalb der Struktur, die Anwesenheit des einen oder mehrerer Bewohner darin und den Belüftungsstatus der Struktur von der Mehrzahl von Sensoren beziehen;
die empfangenen Luftqualitätsniveaus innerhalb der Struktur mit einem vordefinierten Schwellenwert zu vergleichen;
einen ersten Satz von Warnungen in Echtzeit an den einen oder mehrere Bewohner über eine Rückkopplungseinheit (225) bereitzustellen und einen anfänglichen Belüftungsstatus als Reaktion darauf, dass die Luftqualitätsniveaus größer als der vordefinierte Schwellenwert sind, aufzuzeichnen;
nach dem Bereitstellen des ersten Satzes von Warnungen die Luftqualitätsniveaus innerhalb der Struktur mit dem vordefinierten Schwellenwert und den anfänglichen Belüftungsstatus der Struktur mit einem gegenwärtigen Belüftungsstatus der Struktur zu vergleichen, wobei der gegenwärtige Belüftungsstatus als Reaktion darauf aufgezeichnet wird, dass die Luftqualitätsniveaus größer als der vordefinierte Schwellenwert sind; und
einen Server (135), der kommunikativ mit der Steuereinheit gekoppelt ist, der dazu konfiguriert ist:
periodisch von der Steuereinheit Informationen zu empfangen, die sich darauf beziehen, dass die Luftqualitätsniveaus größer sind als der vordefinierte Schwellenwert, basierend auf dem Vergleich der Luftqualitätsniveaus mit dem vordefinierten Schwellenwert zusammen mit dem Belüftungsstatus der Struktur, basierend auf dem Vergleich des anfänglichen Belüftungsstatus mit dem gegenwärtigen Belüftungsstatus, nachdem die Steuereinheit den ersten Satz von Warnungen bereitstellt; und
einen zweiten Satz von Warnungen auf einer Kommunikationsvorrichtung (145) des einen oder mehrerer Bewohner als Reaktion auf eine Bestimmung bereitzustellen, dass die Luftqualitätsniveaus innerhalb der Struktur größer als das vordefinierte Schwellenwertniveau bleiben und der gegenwärtige Belüftungsstatus der Struktur dem anfänglichen Belüftungsstatus gleicht, und basierend auf äußeren Wetterbedingungen,
wobei der vordefinierte Schwellenwert von einer Belegungsintensität des einen oder mehrerer Bewohner innerhalb der Struktur abhängt, wobei die Steuereinheit dazu konfiguriert ist, die Belegungsintensität als ein Produkt aus einer Anzahl des einen oder mehrerer Bewohner, die innerhalb der Struktur anwesend sind, und einer durchschnittlichen Zeit, in der der eine oder mehrere Bewohner innerhalb der Struktur anwesend sind, zu berechnen, und wobei eine Untergruppe der Mehrzahl von Sensoren (410) dazu konfiguriert ist, nach Wi-Fi-fähigen Kommunikationsvorrichtungen (145) des einen oder mehrerer Bewohner innerhalb einer nahen Entfernung zu scannen, um die Anzahl von Bewohnern innerhalb der Struktur zu bestimmen.

2. System nach Anspruch 1, wobei die Struktur zumindest eines von einem Gebäude, einem Haus, einer Wohnung und einem Büroraum ist.

3. System nach einem der vorhergehenden Ansprüche, wobei der Server Informationen empfängt, die sich auf die externen Wetterbedingungen von einem Wetterberichtsmodul beziehen.

4. System nach einem der vorhergehenden Ansprüche, wobei der erste Satz von Warnungen eine akustische Warnung und/oder eine visuelle Warnung und/oder eine haptische Warnung und/oder eine Kombination davon ist.

5. System nach einem der vorhergehenden Ansprüche, wobei der zweite Satz von Warnungen eine Push-Nachricht auf der Kommunikationsvorrichtung, eine SMS-Warnung, eine In-App-Benachrichtigung, eine E-Mail oder eine Kombination davon ist, hinsichtlich einer oder mehrerer Belüftungsanforderungen der Struktur, wenn die Luftqualitätsniveaus über den vordefinierten Luftqualitätsniveaus und Gesundheitsrisiken für den einen oder mehrere Bewohner aufgrund der Luftqualitätsniveaus bleiben.

6. System nach Anspruch 5, wobei der Server periodisch den zweiten Satz von Warnungen nach Ablauf einer voreingestellten Zeitspanne nach dem ersten Satz von Warnungen bereitstellt, wobei die voreingestellte Zeitspanne dem einen oder mehreren Bewohnern bereitgestellt wird, um die eine oder mehrere Belüftungsanforderungen durchzuführen.

7. System nach Anspruch 5 oder 6, wobei der eine oder mehrere Belüftungsanforderungen entweder ein oder mehrere Fenster öffnen, eine oder mehrere Türen öffnen, das eine oder mehrere Fenster schließen oder die eine oder mehrere Türen schließen, ist.

8. System nach einem der vorhergehenden Ansprüche, wobei jeder der anfänglichen und der gegenwärtige, Belüftungsstatus: ein oder mehrere offene Fenster und/oder ein oder mehrere geschlossene Fenster und/oder eine oder mehrere offene Türen und/oder eine oder mehrere geschlossene Türen und/oder eine oder mehrere teilweise offene Türen und/oder eine oder mehrere teilweise geschlossene Türen und/oder ein oder mehrere teilweise offene Fenster und/oder ein oder mehrere teilweise geschlossene Fenster ist.

9. System nach einem der vorhergehenden Ansprüche, wobei die Mehrzahl der Sensoren einer von einem Temperatursensor, einem CO2-Sensor, einem VOC-Sensor, einem Feinpartikelsensor, einem Feuchtigkeitssensor, einem Fenstersensor, einem Türsensor, einem Belegungssensor und einem Belegungsintensitätssensor ist, aber nicht darauf beschränkt ist.

10. System nach einem der vorhergehenden Ansprüche, wobei der Server ferner dazu konfiguriert ist:
Informationen von der Steuereinheit zu empfangen, die sich darauf beziehen, dass der vordefinierte Schwellenwert größer als die Luftqualitätsniveaus ist, und
eine Benachrichtigung an den einen oder mehrere Bewohner auf der Kommunikationsvorrichtung bereitzustellen, die den einen oder mehrere Bewohner benachrichtigt, den gegenwärtigen Belüftungsstatus auf den anfänglichen Belüftungsstatus zurückzusetzen.

11. System nach einem der vorhergehenden Ansprüche, wobei der Belüftungsstatus ist: ein oder mehrere offene Fenster und/oder ein oder mehrere geschlossene Fenster und/oder eine oder mehrere offene Türen und/oder eine oder mehrere geschlossene Türen und/oder eine oder mehrere teilweise offene Türen und/oder eine oder mehrere teilweise geschlossene Türen und/oder ein oder mehrere teilweise offene Fenster und/oder ein oder mehrere teilweise geschlossene Fenster.

12. Verfahren zum Aufrechterhalten der Luftqualität innerhalb einer Struktur, wobei das Verfahren die folgenden Schritte umfasst:
periodisches Empfangen, durch eine Steuereinheit (130), von Daten, die sich auf die Luftqualitätsniveaus innerhalb der Struktur, die Anwesenheit von einem oder mehreren Bewohnern darin und einen Belüftungsstatus der Struktur beziehen, von einer Mehrzahl von Sensoren (120, 405, 410, 415);
Vergleichen der empfangenen Luftqualitätsniveaus innerhalb der Struktur mit einem vordefinierten Schwellenwert durch die Steuereinheit;
Bereitstellen eines ersten Satzes von Warnungen durch die Steuereinheit an den einen oder mehrere Bewohner über eine Rückkopplungseinheit (225) und Aufzeichnen eines anfänglichen Belüftungsstatus als Reaktion darauf, dass die Luftqualitätsniveaus größer als der vordefinierte Schwellenwert sind;
Vergleichen, nach dem Bereitstellen des ersten Satzes von Warnungen der Luftqualitätsniveaus innerhalb der Struktur durch die Steuereinheit mit dem vordefinierten Schwellenwert und den anfänglichen Belüftungsstatus der Struktur mit einem gegenwärtigen Belüftungsstatus der Struktur, wobei der gegenwärtige Belüftungsstatus als Reaktion darauf aufgezeichnet wird, dass die Luftqualitätsniveaus größer als der vordefinierte Schwellenwert sind;
periodisches Empfangen von der Steuereinheit durch den Server (135) von Informationen, die sich darauf beziehen, dass die Luftqualitätsniveaus größer sind als der vordefinierte Schwellenwert, basierend auf dem Vergleich der Luftqualitätsniveaus mit dem vordefinierten Schwellenwert zusammen mit dem Belüftungsstatus der Struktur, basierend auf dem Vergleich des anfänglichen Belüftungsstatus mit dem gegenwärtigen Belüftungsstatus, nachdem die Steuereinheit den ersten Satz von Warnungen bereitstellt; und
Bereitstellen eines zweiten Satzes von Warnungen durch den Server auf einer Kommunikationsvorrichtung (145) des einen oder mehrerer Bewohner als Reaktion auf eine Bestimmung, dass die Luftqualitätsniveaus innerhalb der Struktur größer als das vordefinierte Schwellenwertniveau bleiben und der gegenwärtige Belüftungsstatus der Struktur dem anfänglichen Belüftungsstatus gleicht, und basierend auf äußeren Wetterbedingungen,
wobei der vordefinierte Schwellenwert von einer Belegungsintensität des einen oder mehrerer Bewohner innerhalb der Struktur abhängt, wobei die Steuereinheit die Belegungsintensität als ein Produkt aus einer Anzahl des einen oder mehrerer Bewohner, die innerhalb der Struktur anwesend sind, und einer durchschnittlichen Zeit, in der der eine oder mehrere Bewohner innerhalb der Struktur anwesend sind, berechnet, und wobei eine Untergruppe der Mehrzahl von Sensoren (410) nach Wi-Fi-fähigen Kommunikationsvorrichtungen (145) des einen oder mehrerer Bewohner innerhalb einer nahen Entfernung scannt, um die Anzahl von Bewohnern innerhalb der Struktur zu bestimmen.

## Revendications

1. Système (105) de maintien de la qualité de l'air à l'intérieur d'une structure, le système comportant :
une pluralité de capteurs (120, 405, 410, 415) positionnés à l'intérieur de la structure pour au moins mesurer des niveaux de qualité de l'air à l'intérieur de la structure, détecter la présence d'un ou de plusieurs occupants dans celle-ci, et détecter un état d'aération de la structure ;
une unité (130) de commande, en communication avec la pluralité de capteurs, configurée pour :
recevoir périodiquement des données se rapportant aux niveaux de qualité de l'air à l'intérieur de la structure, à la présence de l'occupant ou des occupants dans celle-ci, et à l'état d'aération de la structure en provenance de la pluralité de capteurs ;
comparer les niveaux reçus de qualité de l'air à l'intérieur de la structure avec un niveau seuil prédéfini ;
fournir un premier ensemble d'alertes en temps réel à l'occupant ou aux occupants par l'intermédiaire d'une unité (225) de rétroaction et enregistrer un état initial d'aération, en réaction au fait que les niveaux de qualité de l'air soient supérieurs au niveau seuil prédéfini ;
comparer, suite à la fourniture du premier ensemble d'alertes, les niveaux de qualité de l'air à l'intérieur de la structure avec le niveau seuil prédéfini, et l'état initial d'aération de la structure à un état actuel d'aération de la structure, l'état actuel d'aération étant enregistré en réaction au fait que les niveaux de qualité de l'air soient supérieurs au niveau seuil prédéfini ; et
un serveur (135) couplé de manière à pouvoir communiquer avec l'unité de commande, configuré pour :
recevoir périodiquement, en provenance de l'unité de commande, des informations se rapportant au fait que les niveaux de qualité de l'air soient supérieurs au niveau seuil prédéfini d'après une comparaison des niveaux de qualité de l'air avec le niveau seuil prédéfini ainsi qu'à l'état d'aération de la structure d'après une comparaison de l'état initial d'aération à l'état actuel d'aération suite à la fourniture du premier ensemble d'alertes par l'unité de commande ; et
fournir un second ensemble d'alertes sur un dispositif (145) de communication de l'occupant ou des occupants en réaction à une détermination du fait que les niveaux de qualité de l'air à l'intérieur de la structure restent supérieurs au niveau seuil prédéfini et que l'état actuel d'aération de la structure soit équivalent à l'état initial d'aération, et d'après des conditions météorologiques externes,
le niveau seuil prédéfini dépendant d'une intensité d'occupation de l'occupant ou des occupants à l'intérieur de la structure, l'unité de commande étant configurée pour calculer l'intensité d'occupation comme un produit d'un nombre de l'occupant ou des occupants présents à l'intérieur de la structure et d'un temps moyen où l'occupant ou les occupants sont présents à l'intérieur de la structure, et un sous-ensemble de la pluralité de capteurs (410) étant configuré pour rechercher par balayage des dispositifs (145) de communication de l'occupant ou des occupants dont le Wi-Fi est activé dans la limite d'une distance proximale pour déterminer le nombre d'occupants à l'intérieur de la structure.

2. Système selon la revendication 1, la structure étant au moins une structure parmi un bâtiment, une maison, un appartement et un local de bureaux.

3. Système selon l'une quelconque des revendications précédentes, le serveur recevant des informations se rapportant aux conditions météorologiques externes en provenance d'un module de compte rendu météorologique.

4. Système selon l'une quelconque des revendications précédentes, le premier ensemble d'alertes étant au moins une alerte parmi une alerte audio, une alerte visuelle, une alerte haptique et une combinaison de celles-ci.

5. Système selon l'une quelconque des revendications précédentes, le second ensemble d'alertes étant un élément parmi un message de distribution sélective sur le dispositif de communication, des alertes par SMS, une notification dans une appli, un email, et une combinaison de ceux-ci concernant une ou plusieurs exigences d'aération de la structure si les niveaux de qualité de l'air restent supérieurs aux niveaux prédéfinis de qualité de l'air et des risques pour la santé de l'occupant ou des occupants du fait des niveaux de qualité de l'air.

6. Système selon la revendication 5, le serveur fournissant périodiquement le second ensemble d'alertes lors de la fin d'un laps de temps préétabli à la suite du premier ensemble d'alertes, le laps de temps préétabli étant fourni à l'occupant ou aux occupants pour réaliser l'exigence ou les exigences d'aération.

7. Système selon la revendication 5 ou 6, l'exigence ou les exigences d'aération étant une exigence parmi celles consistant à ouvrir une ou plusieurs fenêtres, ouvrir une ou plusieurs portes, fermer la ou les fenêtres et fermer la ou les portes.

8. Système selon l'une quelconque des revendications précédentes, chacun de l'état initial et de l'état actuel d'aération étant au moins un état parmi une ou plusieurs fenêtres ouvertes, une ou plusieurs fenêtres fermées, une ou plusieurs portes ouvertes, une ou plusieurs portes fermées, une ou plusieurs portes partiellement ouvertes, une ou plusieurs portes partiellement fermées, une ou plusieurs fenêtres partiellement ouvertes, et une ou plusieurs fenêtres partiellement fermées.

9. Système selon l'une quelconque des revendications précédentes, la pluralité de capteurs étant, mais ne se limitant pas à, un capteur parmi un capteur de température, un capteur de CO2, un capteur de COV, un capteur de particules fines, un capteur d'humidité, un capteur de fenêtre, un capteur de porte, un capteur d'occupation et un capteur d'intensité d'occupation.

10. Système selon l'une quelconque des revendications précédentes, le serveur étant en outre configuré pour :
recevoir des informations, en provenance de l'unité de commande, se rapportant au fait que le niveau seuil prédéfini soit supérieur aux niveaux de qualité de l'air, et
fournir une notification à l'occupant ou aux occupants sur le dispositif de communication notifiant à l'occupant ou aux occupants qu'il convient de réinitialiser l'état actuel d'aération à l'état initial d'aération.

11. Système selon l'une quelconque des revendications précédentes, l'état d'aération étant au moins un état parmi une ou plusieurs fenêtres ouvertes, une ou plusieurs fenêtres fermées, une ou plusieurs portes ouvertes, une ou plusieurs portes fermées, une ou plusieurs portes partiellement ouvertes, une ou plusieurs portes partiellement fermées, une ou plusieurs fenêtres partiellement ouvertes, et une ou plusieurs fenêtres partiellement fermées.

12. Procédé de maintien de la qualité de l'air à l'intérieur d'une structure, le procédé comportant les étapes de :
réception périodique, par une unité (130) de commande, de données se rapportant aux niveaux de qualité de l'air à l'intérieur de la structure, à la présence d'un ou de plusieurs occupants dans celle-ci, et à un état d'aération de la structure en provenance d'une pluralité de capteurs (120, 405, 410, 415) ;
comparaison, par l'unité de commande, des niveaux reçus de qualité de l'air à l'intérieur de la structure avec un niveau seuil prédéfini ;
fourniture, par l'unité de commande, d'un premier ensemble d'alertes à l'occupant ou aux occupants par l'intermédiaire d'une unité (225) de rétroaction et enregistrement d'un état initial d'aération en réaction au fait que les niveaux de qualité de l'air soient supérieurs au niveau seuil prédéfini ;
comparaison, par l'unité de commande, suite à la fourniture du premier ensemble d'alertes, des niveaux de qualité de l'air à l'intérieur de la structure avec le niveau seuil prédéfini, et de l'état initial d'aération de la structure à un état actuel d'aération de la structure, l'état actuel d'aération étant enregistré en réaction au fait que les niveaux de qualité de l'air soient supérieurs au niveau seuil prédéfini ;
réception périodique, par un serveur (135) en provenance de l'unité de commande, d'informations se rapportant au fait que les niveaux de qualité de l'air soient supérieurs au niveau seuil prédéfini d'après une comparaison des niveaux de qualité de l'air avec le niveau seuil prédéfini ainsi qu'à l'état d'aération de la structure d'après une comparaison de l'état initial d'aération à l'état actuel d'aération, suite à la fourniture du premier ensemble d'alertes par l'unité de commande ; et
fourniture, par le serveur, d'un second ensemble d'alertes sur un dispositif (145) de communication de l'occupant ou des occupants en réaction à une détermination du fait que les niveaux de qualité de l'air à l'intérieur de la structure restent supérieurs au niveau seuil prédéfini et que l'état actuel d'aération de la structure soit équivalent à l'état initial d'aération, et d'après des conditions météorologiques externes,
le niveau seuil prédéfini dépendant d'une intensité d'occupation de l'occupant ou des occupants à l'intérieur de la structure, l'unité de commande calculant l'intensité d'occupation comme un produit d'un nombre de l'occupant ou des occupants présents à l'intérieur de la structure et d'un temps moyen où l'occupant ou les occupants sont présents à l'intérieur de la structure, et un sous-ensemble de la pluralité de capteurs (410) recherchant par balayage des dispositifs (145) de communication de l'occupant ou des occupants dont le Wi-Fi est activé dans la limite d'une distance proximale pour déterminer le nombre d'occupants à l'intérieur de la structure.
